# EUROPEAN PATENT SPECIFICATION

(11) **EP 4 261 008 B1**
(45) Date of publication and mention of the grant of the patent: **21.08.2024**
(21) Application number: 23166914.4
(22) Date of filing: 06.04.2023
(51) Int. Cl.: B29C 49/42, B29C 49/06, B29K 67/00, B29L 31/00

(54) **RESIN CONTAINER MANUFACTURING METHOD AND RESIN CONTAINER MANUFACTURING APPARATUS**
VERFAHREN ZUR HERSTELLUNG EINES HARZBEHÄLTERS UND VORRICHTUNG ZUR HERSTELLUNG EINES HARZBEHÄLTERS
PROCÉDÉ DE FABRICATION DE RÉCIPIENT EN RÉSINE ET APPAREIL DE FABRICATION DE RÉCIPIENT EN RÉSINE

(30) Priority: 11.04.2022 JP 2022065080; 01.02.2023 JP 2023013695
(43) Date of publication of application: 18.10.2023
(73) Proprietor: Ricoh Company, Ltd., Tokyo 143-8555 (JP)
(72) Inventor: NAKAMURA, Takayuki, 143-8555 Tokyo (JP)
(74) Representative: SSM Sandmair

(56) References cited:
- WO-A1-2021/117899
- DE-A1- 102017 120 201
- FR-A1- 3 104 484
- US-A1- 2020 198 213
- US-B2- 11 090 856

## Description

### BACKGROUND

### Technical Field

The present disclosure relates to a resin container manufacturing method and a resin container manufacturing apparatus.

### Related Art

A technique for manufacturing a resin container by laser marking on a preform has been known. For example, a preform positioning apparatus is disclosed in Japanese Unexamined Patent Application Publication No. 2001-310374. In the preform positioning apparatus, the circumferential position of the preform in the mold is determined on the basis of forming the external discontinuity portion to the flange portion or marking by printing.

However, in typical blow molding, since position information is arranged by processing, for example, a notch in the resin container itself, it is difficult to manufacture a resin container having a preferable visibility even if laser marking is performed at the stage of preform. Although the mold can be changed to add the notch, it takes cost. In addition, when the product is a beverage bottle, safety and hygiene of the mouth of the bottle is checked. In a case where the pattern including the image is formed on the preform by laser marking, and the preform is molded into a resin container by blow molding, the productivity is higher. However, the quality of the pattern is lower than that of the pattern formed on the resin container after blow molding. If the pattern with high definition or additional information is formed, it is preferable that a resin container after blow molding is used. In such a case, a method to form a mark at a position having a preferable visibility on the preform by laser marking is established in the present disclosure. Related resin container manufacturing methods are describes in documents US11090856B2, US2020/198213A1, FR3104484A1, DE102017-120201A1 and WO2021/117899A1.

### SUMMARY

In view of the above circumstances, a subject of the present disclosure is to provide a resin container manufacturing method to manufacture a resin container having a preferable visibility.

A resin container manufacturing method includes: forming a first pattern at a first position in a preform to be formed to a resin container, the preform having: a body portion; and a neck portion; forming a second pattern at a second position in the preform based on the first position of the first pattern; and forming a third pattern at a third position in the resin container based on the first position of the first pattern. The forming the first pattern forms the first pattern at one of: the neck portion; or a portion of the body portion in a vicinity of the neck portion.

Further, an embodiment of the present disclosure provides a resin container manufacturing apparatus including: a first pattern forming device to form a first pattern at a first position in a preform to be formed to a resin container, the preform having: a body portion; and a neck portion; a second pattern forming device to from a second pattern at a second position in the preform based on the first position of the first pattern; and a third pattern forming device to from a third pattern at a third position in the resin container based on the first position of the first pattern. The first pattern forming device forms the first pattern at one of: the neck portion; or a portion of the body portion in a vicinity of the neck portion.

According to embodiments of the present invention, a resin container manufacturing method to manufacture a resin container having a preferable visibility can be provided.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a flowchart of a resin container manufacturing method according to the present embodiment:
FIG. 2 is a diagram of a configuration of a resin container manufacturing apparatus according to the present embodiment;
FIG. 3 is a diagram of a configuration of a laser irradiation unit according to the present embodiment;
FIG. 4 is a block diagram of a functional configuration of a controller according to the present embodiment;
FIG. 5A is a diagram of a shape change due to evaporation as an example of change in property of a base material in a preform;
FIG. 5B is a diagram of a shape change due to melting as an example of change in property of the base material in the preform;
FIG. 5C is a diagram of a change in a crystallized state as an example of change in property of the base material in the preform;
FIG. 5D is a diagram of a change in a foamed state as an example of change in property of the base material in the preform;
FIG. 6 is a diagram of an example of a preform on which the first pattern and the second pattern are formed;
FIG. 7A is a diagram of another example of the preform having the first pattern and the second pattern formed on the preform;
FIG. 7B is a diagram of another example of the preform having the first pattern and the second pattern formed on the preform;
FIG. 8 is a diagram of an example of the first pattern formed closer to a neck portion of a body portion;
FIG. 9A is a diagram of an example of formation of the first pattern;
FIG. 9B is a diagram of another example of the formation of the first pattern;
FIG. 9C is a diagram of still another example of the formation of the first pattern;
FIG. 10 is a diagram of a resin container on which a second pattern and a third pattern are formed at correct positions as an example;
FIG. 11 is a diagram of the resin container on which the second pattern and the third pattern are formed at incorrect positions as a comparative example;
FIG. 12 is a diagram of the resin container on which the second pattern and the third pattern are formed at incorrect positions as another comparative example;
FIG. 13 is a diagram of a front surface of the resin container on which the second pattern is formed at a correct position as an example;
FIG. 14 is a diagram of a rear surface of the resin container on which the third pattern is formed at a correct position as an example; and
FIG. 15 is a diagram of the resin container on which the second pattern and the third pattern are formed at incorrect positions as a comparative example.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

### Resin Container Manufacturing Method and Resin Container Manufacturing Apparatus

A resin container manufacturing method according to the first embodiment is a resin container manufacturing method by blow molding and includes forming a first pattern (a first pattern forming step, S 1) on the resin container having a body portion and a neck portion, the first pattern is formed on the neck portion or a portion of the body portion closer to the neck portion; forming a second pattern (a second pattern forming step, S2) on the preform based on a position of the first pattern; and forming a third pattern (a third pattern forming step, S4) on a resin container after blow molding (a blow molding step, S3). Herein, the perform is molded into the resin container by mold blowing. The resin container manufacturing method may include other steps.

A resin container manufacturing apparatus according to the first embodiment is a resin container manufacturing apparatus by blow molding and includes a first pattern forming device to form a first pattern on the resin container having a body portion and a neck portion, the first pattern is formed on the neck portion or a portion of the body portion closer to the neck portion; a second pattern forming device to form a second pattern on the preform based on a position of the first pattern; and a third pattern forming device to form a third pattern on a resin container after blow molding. Herein, the perform is molded into the resin container by mold blowing. The resin container manufacturing method may include other devices.

The resin container manufacturing method according to the first embodiments is suitably implemented by the resin container manufacturing apparatus. The first pattern forming device forms the first pattern, the second pattern forming device forms the second pattern, and the third pattern forming device forms the third pattern. The other devices processes the other steps.

A resin container manufacturing method includes: forming a first pattern at a first position in a preform to be formed to a resin container, the preform having: a body portion; and a neck portion; forming a second pattern at a second position in the preform based on the first position of the first pattern; and forming a third pattern at a third position in the resin container based on the first position of the first pattern. The forming the first pattern forms the first pattern at one of: the neck portion; or a portion of the body portion in a vicinity of the neck portion.

A resin container manufacturing apparatus includes: a first pattern forming device to form a first pattern at a first position in a preform to be formed to a resin container, the preform having: a body portion; and a neck portion; a second pattern forming device to from a second pattern at a second position in the preform based on the first position of the first pattern; and a third pattern forming device to from a third pattern at a third position in the resin container based on the first position of the first pattern. The first pattern forming device forms the first pattern at one of: the neck portion; or a portion of the body portion in a vicinity of the neck portion.

Since the resin container manufacturing method according to the first embodiment includes forming the first pattern (S1) on the preform, the first pattern is formed at the neck portion or a portion of the body portion closer to the neck portion; forming the second pattern (S2) on the preform based on the first pattern, and forming the third pattern (S4) on the preform based on the first pattern after blow molding (S3), the resin container having a preferable visibility can be provided. Thus, when the second pattern formed on the preform before blow molding is molded into the resin container by blow molded, for example, the aspect ratio of the resin container changes from that of the preform. As a result, the pattern does not match the predetermined enlargement ratio and the visibility may be reduced. Herein, the pattern may include an image. However, in the present embodiment, since the third pattern is formed on the resin container after blow molding based on the position of the first pattern, for example, the aspect ratio does not change and the visibility of the third pattern is increased more than that of the second pattern.

Further, in the present embodiment, since the relative position of the first pattern and the second pattern is constant, the third pattern can be formed at an optimum position based on the position of the first pattern. Herein, the term "optimum" indicates that the third pattern does not overlap with the second pattern and the positional relation between the second pattern and the third pattern is constant. Since the first pattern is a simple pattern (e.g., a longitudinal line), the first pattern can be recognized by, for example, a low-cost simple optical device. Such a low-cost simple optical device includes a light emitting element and a light receiving element. Specifically, a light emitting diode (LED) and a photodiode (PD) are used in the device. As a result, it is easy to specify the portion on which the second pattern is formed. If there is no first pattern, a large recognition device to specify the position of the second pattern is used. For example, in the larger recognition device, a camera or a line sensor is used to capture an image, and the image is processed by image processing to determine a position in which the third pattern is formed. However, such a recognition device may increase the cost.

Further, because of the presence of the first pattern, the position of the second pattern can be found by recognizing the first pattern by a low-cost simple optical device without using an image processing device to recognize the position of the second pattern (e.g., a camera or a line sensor captures the image, and the image is processed). For example, a low-cost simple optical device includes a light emitting element and a light receiving element. Specifically, a light emitting diode (LED) and a photodiode (PD) are used in the device. As a result, the cost of the device as a whole is reduced.

### First Pattern Forming Step and First Pattern Forming Device

The first pattern forming step is a step of forming the first pattern on the neck portion of the preform or a portion of the body portion closer to the neck portion, and is formed by the first pattern forming device. The first pattern forming device is not particularly limited as long as it can form the first pattern on the preform and can be appropriately selected according to the purpose, and examples thereof include a laser marking device, an inkjet printer, or a metal mold.

### Preform

A preform is an intermediate product in the stage before expanding (stretching) the preform and molding the preform into a resin container such as a PET bottle. The volume of the preform is 1/5 to 1/10 of that of a resin container such as a PET bottle. The material, shape, size, structure, or color of the preform are not particularly limited, and can be appropriately selected according to the purpose. The material of the preform is not particularly limited and can be appropriately selected according to the purpose. For example, the material is resin. Examples of the resin of the container body include polyvinyl alcohol (PVA), polybutylene adipate terephthalate (PBAT), polyethylene terephthalate succinate, polyethylene (PE), polypropylene (PP), polyethylene terephthalate (PET), polyvinyl chloride (PVC), polystyrene (PS), polyurethane, epoxy, bio polybutylene succinate (PBS), butylene adipate co-terephthalate (PBAT), polyethylene-starch blend, poly(butylene succinate-co-terephthalate), polylactic acid (PLA), poly(3-hydroxybutyrate-co-3-hydroxyhexanoate) (PHBH), polyhydroxyalkanoate (PHA), Bio-PET 30, Bio-polyamide (PA) 610, 410, and 510, Bio-PA1012 and 10T, Bio-PA11T, MXD10, Bio polycarbonate, Bio polyurethane, Bio-Polyethylene, Bio-PET100, Bio-PA11, Bio-PA1010. These may be used alone or in combination thereof. Among these resins, biodegradable resins such as polyvinyl alcohol, polybutylene adipate terephthalate, and polyethylene terephthalate succinate are preferable in terms of the environmental load.

The shape of the preform is not particularly limited and can be appropriately selected according to the purpose, and examples thereof include a bottle shape, a cylindrical shape, a quadrangular prism shape as a non-cylindrical shape, a polygonal columnar shape, or an elliptical columnar shape. Among these shapes, the bottle shape is preferable. The bottle-shape preform has a finish portion (i.e., a spout, a mouth, or an opening), a shoulder portion integrated with the finish portion, a sidewall portion integrated with the shoulder portion, and a bottom portion integrated with the sidewall portion. The size of the preform is not particularly limited and can be appropriately selected in accordance with the size of the resin container. The structure of the preform is not particularly limited and can be appropriately selected according to the purpose, and may be, for example, a single-layer structure or a multi-layer structure.

Examples of the color of the preform include colorless and transparent, colored and transparent, and colored and opaque. Among these shapes, the colorless and transparent is preferable.

The method of molding the preform is not particularly limited and can be appropriately selected according to the purpose. For example, the preform can be molded by an injection molding method.

The blow molding is not particularly limited and can be appropriately selected according to the purpose. For example, a preform is set in a blow molding apparatus, and the preform is heated. Next, an extension rod (stretching rod) is inserted into the heated preform, compressed air is supplied from the inserted extension rod, and the extension rod is extended. Thereby, the preform is stretched in the longitudinal direction and the transverse direction, and a resin container is molded.

The first pattern is not particularly limited as long as the position of the preform in the circumferential direction is determined with respect to the mold (e.g., metal mold) at the time of blow molding (blow molding process) and can be appropriately selected according to the purpose. Examples of the first pattern include a line, a letter, a symbol, a protrusion, a convex, a concave, a recess, or notches.

### Second Pattern Forming Step and Second Pattern Forming Device

The second pattern forming step is a step of forming a second pattern on the preform based on the first pattern (a position of the first pattern), and is performed by the second pattern forming device. The second pattern forming device is not particularly limited as long as it can form the second pattern on the preform, and can be appropriately selected according to the purpose, and examples thereof include a laser marking device, an inkjet printer, and a mold. Further, because of the presence of the first pattern, the position of the second pattern can be found by recognizing the first pattern by a low-cost simple optical device without using an image processing device to recognize the position of the second pattern (e.g., a camera or a line sensor captures the image, and the image is processed). For example, a low-cost simple optical device includes a light emitting element and a light receiving element. Specifically, a light emitting diode (LED) and a photodiode (PD) are used in the device. As a result, the cost of the device as a whole is reduced.

The second pattern is not particularly limited and can be appropriately selected according to the purpose and includes, for example, characters, symbols, graphics, images, or codes. Specific examples of the second pattern include a name, an ingredient, an identification number, a manufacturer name, a date and time of manufacture, a best-before date, a bar code, a QR code (registered trademark), a recycle symbol, or a logo.

### Third Pattern Forming Step and Third Pattern Forming Device

The third pattern forming step is a step of forming a third pattern on the resin container after blow molding based on the first pattern (a position of the third pattern), and is performed by a third pattern forming device. The third pattern forming device is not particularly limited as long as it can form the third pattern on the preform, and can be appropriately selected according to the purpose, and examples thereof include a laser marking device, and an inkjet printer. Further, the third pattern may be formed based on the first pattern after a steps of filling of contents after blow molding.

The third pattern is not particularly limited and can be appropriately selected according to the purpose and includes, for example, characters, symbols, graphics, images, or codes. Specific examples of the second pattern include a name, an ingredient, an identification number, a manufacturer name, a date and time of manufacture, a best-before date, a bar code, a QR code (registered trademark), a recycle symbol, or a logo.

### Other Steps and Other Device

Examples of the other steps include a conveying step and a control step. Examples of the other devices include a conveying device and a control device.

In one embodiment of the present invention, at least one of the first pattern, the second pattern, or the third pattern is preferably formed by laser marking. The first pattern may be formed in the mouth portion or the finish portion of the resin container with a shape such as a notch with, for example, the mold. However, to manufacture a new mold or to perform a cutting process for forming the shape such as a notch is an additional process, which results in high cost. By contrast, when the first pattern is formed by laser marking, to manufacture a new mold is omitted, and in the case of a resin container for beverages, only a depth of about several tens µm from the surface of the resin container is processed, so that the low-cost of manufacturing is achieved. Further, the third pattern can be formed on the resin container after blow molding by using, for example, a resin sheet. However, a resin sheet can be omitted by forming the third pattern by laser marking, so that the amount of resin used can be reduced.

In the resin container manufacturing method according to the embodiments, the forming the first pattern forms the first pattern by laser marking.

In the resin container manufacturing method according to the embodiments, the forming the second pattern forms the second pattern by laser marking.

In the resin container manufacturing method according to the embodiments, the forming the third pattern forms the third pattern by laser marking.

In one embodiment of the present invention, the second pattern and the third pattern are not formed so as to overlap each other, and the positions of the second pattern and the third pattern in the circumferential direction on the resin container are the same. When the second pattern and the third pattern are formed so as to overlap each other, or when the positions of the second pattern and the third pattern in the circumferential direction on the resin container are different, the consumer may misunderstand information on the patterns or have a negative impression on a product quality due to the appearance. In the present invention, since the positional relation between the first pattern and the second pattern corresponds to each other, based on the first pattern, the second pattern and the third pattern are not formed so as to overlap each other, and the second pattern and the third pattern can be formed so as to have the same circumferential position on the resin container.

In the resin container manufacturing method according to the embodiments, the third position is different from the second position in an axial direction of the resin container, and the third position is the same with the second position in a circumferential direction of the resin container.

In one aspect of the invention, the second pattern is any one of a text, an image, or a graphic, and the third pattern is any of one of a text, an image, or graphic. The second pattern includes a name of a manufacturer, a logo, a product name, or a product image related to the contents of the resin container, and is indicated by letters, images, or figures. In addition, letters such as description of contents, composition of ingredients, and precautionary statements accompanying use, eating or drinking is provided. In addition, the third pattern is similar to the second pattern, and further, information on the product is represented by a character, an image, or figure.

In the resin container manufacturing method according to the embodiments, the second pattern includes at least one of a character, an image, or a figure.

In the resin container manufacturing method according to the embodiments, the third pattern includes at least one of a character, an image or a figure.

In one aspect of the present invention, the first pattern is formed in a region on the preform. The region is in the vicinity of the opening through which air is blow into the preform. Since the region in the vicinity of the opening through which air is blown into the preform is a region at which the expansion rate (stretch ratio) at the time of blow molding is smaller, if the region is set as a subject of inspection in advance by an appearance inspection apparatus, there is no error in appearance inspection. According to the aspect, the first pattern can be recognized by a low-cost apparatus.

In the resin container manufacturing method according to the embodiments, further includes: blowing air into the preform on which the first pattern and the second pattern are formed to form the resin container. The one of the neck portion or the portion of the body portion is in a vicinity of an opening of the preform, and the blowing blows the air into the preform through the opening.

In one embodiment of the present invention, the region in which the first pattern is formed in the preform is a non-deformation region that does not deform when the preform is molded by blow molding. The non-deformation region is a region that is not expanded (stretched) and is not deformed when the preform is molded by blow molding. According to the embodiments, since the non-deformation region is not subject to the appearance inspection after blow molding or after filling the contents into the resin container, the first pattern is not detected as an error in the appearance inspection. According to the aspect, the first pattern can be recognized by a low-cost apparatus.

A resin container manufacturing method according to the second embodiment is a resin container manufacturing method by blow molding and includes: forming the second pattern (a second pattern forming step) on a preform; forming the first pattern (a first pattern forming step) on the preform, the first pattern is formed on at least one of the neck portion or a portion of the body portion closer to the neck portion after the second pattern is formed; forming the third pattern (a third pattern forming step) on the preform based on the first pattern before blow molding (a blow molding step). In addition, the resin container manufacturing method may include the other steps.

A resin container manufacturing method includes: forming a second pattern at a second position in a preform to be formed to a resin container, the preform having: a body portion; and a neck portion; forming a first pattern at a first position in the preform based on the second position of the second pattern; and forming a third pattern at a third position in the resin container based on the first position of the first pattern. The forming the first pattern forms the first pattern at one of: the neck portion; or a portion of the body portion in a vicinity of the neck portion.

The first pattern forming step and the first pattern forming device, the second pattern forming step and the second pattern forming device, the third pattern forming step and the third pattern forming device, and other steps and other devices in the resin container manufacturing method and the resin container manufacturing apparatus according to the second embodiment of the present invention are similar to the first pattern forming step and the first pattern forming device, the second pattern forming step and the second pattern forming device, the third pattern forming step and the third pattern forming device, and other steps and other devices in the resin container manufacturing method and the resin container manufacturing apparatus according to the first embodiment of the present invention, respectively, and thus the description thereof is omitted.

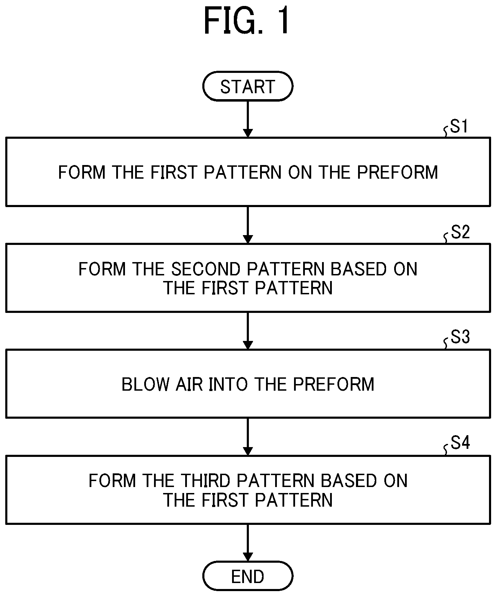

FIG. 1 is a flowchart of the resin container manufacturing method according to the embodiment. The flow of the resin container manufacturing method according to the present embodiment will be described below.

In step S1, when the first pattern is formed in the preform, the controller of the resin container manufacturing apparatus shifts the processing to step S2. Although the first pattern is formed at a predetermined position of the preform without any particular limitation, it is preferable to form the first pattern in a region of the preform with less irregularities. This is because the neck ring, the screw threaded portion, and the support ring may be difficult to recognize depending on the type of the optical sensor of the recognition apparatus. Further, if the first pattern is formed in a region lower than the content after the content is filled into the completed resin container, it becomes difficult to inspect foreign matter in the manufacturing process. Thus, it is preferable that the first pattern is formed above the region filled with the contents, that is, at the neck portion of the preform. Preferably, the size of the first pattern is small in consideration of the formation time of the first pattern. Recognition of the first pattern depends on the performance of the optical sensor of the recognition apparatus. Preferably, the first pattern has a size recognizable by the recognition apparatus and is smaller. Specifically, the size of the first pattern is preferably 0.1 mm or more and 200 mm or less. When the first pattern is, for example, a longitudinal line, the size of the first pattern represents the maximum length of the longitudinal line in the longitudinal direction. The shape of the first pattern is not particularly limited as long as it can be read by the recognition apparatus and can be appropriately selected according to the purpose. However, it is preferable that the change of the first pattern in the axial direction of the preform is smaller. This is because if the change in the shape of the first pattern in the axial direction of the preform is larger, the position of the first pattern read by the recognition apparatus varies, and the change in the formation position of the second pattern after blow molding also increases.

In step S2, when the controller of the resin container manufacturing apparatus forms the second pattern on the preform based on the first pattern, the process proceeds to step S3. Preferably, the second pattern is formed in a region having a high expansion ratio (stretch ratio) of the surface area after blow molding of the preform. The second pattern is formed with images and characters such as a product name and a legal indication, and in order to appeal of the product to customers, a region having a high expansion ratio of the surface area has a smaller processing area at the time of preform formation, so that the time for forming the second pattern on the preform can be reduced, and productivity can be increased. The formation position of the second pattern in the circumferential direction is preferably formed so that the outer peripheral portion of the second pattern region or the central portion of the second pattern becomes a predetermined position with respect to the first pattern. The size and shape of the second pattern are not particularly limited as long as images and characters such as a product name and a legal indication satisfy the appeal of the product and predetermined regulations, and can be appropriately selected according to the purpose. However, preferably, the size and shape of the second pattern is small in terms of productivity of processing into a preform. Specifically, the size of the second pattern is preferably 1 mm or more and 200 mm or less. When the second pattern is, for example, an image or a character, the size of the second pattern represents the maximum length of the entire image or character in the width direction.

In step S3, when air is blown into the preform, the process proceeds to step the S4. Air is blown from the opening of the preform into the preform, the process of the blow molding is performed, and the resin container is manufactured.

In step S4, when the third pattern is formed based on the first pattern, the controller of the resin container manufacturing apparatus terminates the present process. Since the arrangement of the third pattern is determined based on the first pattern, even if the third pattern overlaps with the second pattern to some extent, the degree of the overlap can be adjusted, so that the visibility of the third pattern is not decreased. Thus, the position at which the third pattern is formed based on the first pattern is not particularly limited as long as it is a position at which the appeal of the commercial value and the visibility are not reduced.

The Steps S2 and S4 are performed as the same process using a laser irradiation apparatus in the same resin container manufacturing apparatus. The Step S3 may be performed using an apparatus different from the laser irradiation apparatus, using a molding apparatus, or using an apparatus in which the laser irradiation apparatus and the molding apparatus are integrated.

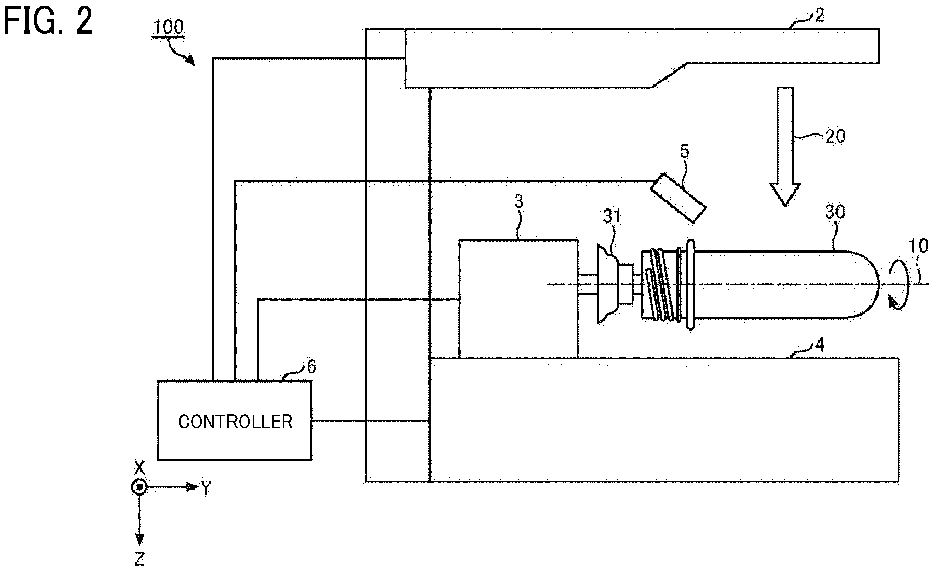

As illustrated in FIG. 2, the resin container manufacturing apparatus 100 includes a laser irradiation unit 2, a rotation unit 3, a holding unit 31, a movement unit 4, a dust collection unit 5, and a controller 6. The resin container manufacturing apparatus 100 rotatably holds the preform 30 having a cylindrical shape around a cylindrical shaft 10 of the preform 30 via a holding unit 31. Then, at least one of the first pattern or the second pattern is formed in the surface on the preform 30 by irradiating the preform 30 with a laser beam from a laser irradiation unit 2 and changing the properties of the base material of the preform 30.

The laser irradiation unit 2 scans the preform 30 with the laser beam emitted from the laser light source in the Y-direction in FIG. 2, and irradiates the preform 30 arranged in the positive Z-direction with the processing laser beam 20.

The rotation unit 3 holds the preform 30 with the holding unit 31. The holding unit 31 is a coupling member connected to a motor shaft of a motor as a driving portion provided in the rotation unit 3, and one end of the holding unit 31 is inserted into the mouth portion of the preform 30 to hold the preform 30. By rotating the holding unit 31 due to the rotation of the motor shaft, the preform 30 held by the holding unit 31 is rotated around the cylindrical shaft 10.

The movement unit 4 is a linear motion stage provided with a table, and the rotation unit 3 is mounted on the table of the movement unit 4. The movement unit 4 moves the table forward and backward in the Y-direction so that the rotation unit 3, the holding unit 31, and the preform 30 are moved forward and backward in the Y-direction together.

The dust collection unit 5 is an air suction device disposed in the vicinity of a portion of the preform 30 irradiated with the processing laser beam 20. The dust collection unit 5 collects the plume and dust by sucking air. The plume and the dust are generated by forming the first pattern by irradiation. The dust collection unit 5 prevents the resin container manufacturing apparatus 100, a preform 30, or the periphery from the contamination by the plume and dust.

The controller 6 is electrically connected to each of the laser light source 21, the scanning unit 23, the rotation unit 3, the movement unit 4, and the dust collection unit 5 through, for example, cables, and outputs control signals to control the operations of the laser light source 21, the scanning unit 23, the rotation unit 3, the movement unit 4, and the dust collection unit 5.

The resin container manufacturing apparatus 100 uses a laser irradiation unit 2 to irradiate the preform 30 with the processing laser beam 20 scanned in the Y-direction while rotating the preform 30 using the rotation unit 3 under the control of the controller 6. Then, at least one of the first pattern or the second pattern is two-dimensionally formed at least one of on the surface or in the interior of the base material of the preform 30.

The range of the scanning region in the Y-direction of the processing laser beam 20 by the laser irradiation unit 2 may be limited. Thus, when at least one of the first pattern or the second pattern is formed in a range wider than the scanning region, the resin container manufacturing apparatus 100 shifts the irradiation region of the processing laser beam 20 on the preform 30 in the Y-direction by moving the preform 30 in the Y-direction by the movement unit 4. While the preform 30 is rotated again by the rotation unit 3, the laser irradiation unit 2 scans the preform 30 with the processing laser beam 20 in the Y-direction, thereby forming at least one of the first pattern or the second pattern on at least one of the surface or the interior of the base material in the preform 30. Thus, at least one of the first pattern or the second pattern can be formed in a wider region of the preform 30.

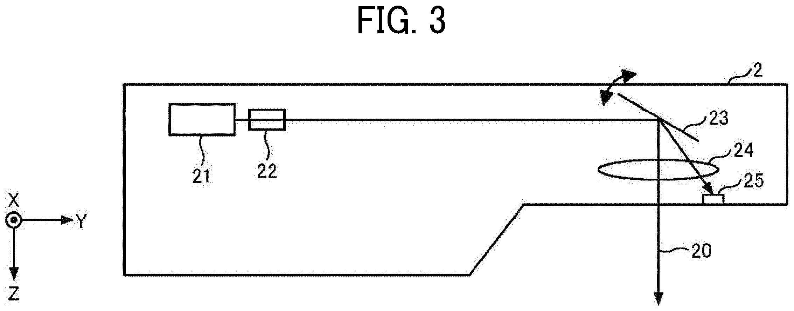

Next, the configuration of the laser irradiation unit 2 will be described. FIG. 3 is a diagram of a configuration of the laser irradiation unit 2 according to the embodiment. As illustrated in FIG. 3, the laser irradiation unit 2 includes a laser light source 21, a beam expander 22, a scanning unit 23, a scanning lens 24, and a synchronization detector 25.

The laser light source 21 is a pulse laser that emits a laser beam. The laser light source 21 emits a laser beam having an output (light intensity) suitable for changing the property of at least one of the surface or the interior of the base material of the preform 30.

The laser light source 21 can control the on-off control (i.e., turning on and off) of emission of laser light, emission frequency control, and light intensity control. As an example of the laser light source 21, a laser light source can emit a light beam having a wavelength of 532 nm, a pulse width of the laser beam of 16 picoseconds, and an average output of 4.9 W. The diameter of the laser beam in the region of the preform 30 in which the properties of the base material are changed is preferably 1 µm or more and 200 µm or less.

The laser light source 21 may include one laser light source or multiple laser light sources. When multiple laser light sources are used, the on-off control, emission frequency control, or light intensity control may be performed independently for each laser light source.

The diameter of the parallel laser beam emitted from the laser light source 21 is expanded by the beam expander 22 and enters the scanning unit 23.

The scanning unit 23 includes a scanning mirror for changing the reflection angle by a driving unit such as a motor. The scanning unit 23 deflects the incident laser beam by changing the angle of the scanning mirror to scan in Y-direction. As the scanning mirror, a galvano-mirror, polygon mirror, or a micro electro mechanical system (MEMS) mirror can be used.

In the present embodiment, the scanning unit 23 performs one-dimensional scanning of the laser beam in the Y-direction as an example, but the embodiment is not limited to the example. The scanning unit 23 may perform two-dimensional scanning of the laser beam in the X-direction and the Y-direction using a scanning mirror that changes the reflection angle in two orthogonal directions.

However, in the case where the surface of the preform 30 having a cylindrical shape is irradiated with the laser beam, when two-dimensional scanning is performed in the X-direction and the Y-direction, the beam spot diameter on the surface of the preform 30 changes according to the scanning in the X-direction. In such a case, one-dimensional scanning is preferable.

The laser beam scanned by the scanning unit 23 is irradiated as a processing laser beam 20 at least one of on the surface or in the interior of the base material of the preform 30.

The scanning lens 24 is an fθ lens that keeps the scanning speed of the processing laser beam 20 deflected by the scanning unit 23 constant and converges the processing laser beam 20 at a predetermined position at least one of on the surface of the base material or in the interior of the preform 30. Preferably, the scanning lens 24 and the preform 30 are arranged so that the beam spot diameter of the processing laser beam 20 is minimized in the region of the preform 30 in which the property of the base material is changed. The scanning lens 24 may be formed by a combination of multiple lenses.

The synchronization detector 25 outputs a synchronization detection signal used to synchronize the scanning of the processing laser beam 20 with the rotation of the preform 30 by the rotator unit 3. The synchronization detector 25 includes a photodiode for outputting an electric signal corresponding to the intensity of the received light, and outputs the electric signal from the photodiode as a synchronization detection signal to the controller 6.

In FIG. 3, the processing laser beam is deflected to scan as an example. By contrast, a processing laser beam array in which a large number of processing laser beams are provided within a range of a printing width (a laser beam array configuration). In the laser beam array configuration, when the preform 30 is rotated, a large number of processing laser beams scans the preform 30 in one direction.

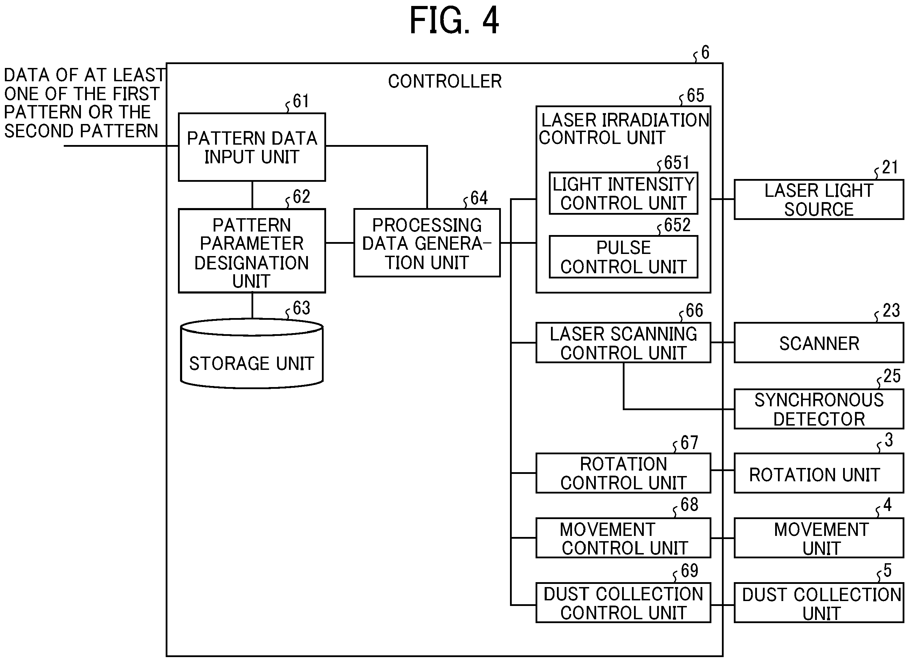

FIG. 4 is a block diagram of a functional configuration of a controller 6 as an example. As illustrated in FIG. 4, the controller 6 includes a pattern data input unit 61, a pattern parameter designation unit 62, a storage unit 63, a processing data generation unit 64, a laser irradiation control unit 65, a laser scanning control unit 66, a rotation control unit 67, a movement control unit 68, and a dust collection control unit 69.

The pattern data input unit 61 inputs pattern data of at least one of the first pattern or the second pattern to be formed on at least one of on the surface or in the interior of the base material in the preform 30 from an external device such as a personal computer (PC) or a scanner. The pattern data of at least one of the first pattern or the second pattern is electronic data including information indicating a code such as a bar code or a QR code (registered trademark) or a pattern such as a character, a graphic or a photograph, and information indicating at least one type of the first pattern and the second pattern.

However, the pattern data of at least one of the first pattern or the second pattern is not limited to the pattern data input from an external device. Data of at least one of the first pattern or the second pattern generated by the user of the resin container manufacturing apparatus 100 using the keyboard and the pointing device of the controller 6 can be input.

The pattern data input unit 61 outputs pattern data of at least one of the input first pattern or the input second pattern to each of the processing data generation unit 64 and the pattern parameter designation unit 62.

The pattern parameter designation unit 62 specifies a processing parameter for forming at least one of the first pattern or the second pattern.

The processing parameter of at least one of the first pattern or the second pattern is information specifying the type, thickness, and processing depth of a line as at least one of the first pattern or the second pattern, or the interval or arrangement of adjacent lines in an aggregate of lines. The processing parameter of at least one of the first pattern or the second pattern is also information specifying the type, size, processing depth of the point as at least one of the first pattern and the second pattern, or the interval or arrangement between adj acent points in the aggregate of points.

The line type is information indicating a straight line, or a curved line. The point type is information indicating the shape of the point such as a circle, an ellipse, a rectangle, or a rhombus. At least one of the first pattern or the second pattern may be configured to have periodicity, or may be configured to be non-periodic. However, a configuration having periodicity is preferable because designation of parameters can be further simplified.

A processing parameter of at least one of a first pattern or a second pattern suitable for increasing visibility corresponding to at least one type of the first pattern or the second pattern such as a character, code, figure, or photograph is determined in advance of the processing by experiment or simulation. The storage unit 63 stores a table of a correspondence relation between at least one type of the first pattern or the second pattern and the processing parameter.

The pattern parameter designation unit 62 can acquire and specify the processing parameter of at least one of the first pattern or the second pattern by referring to the storage unit 63 based on the information indicating the type of at least one of the first pattern or the second pattern input from the pattern data input unit 61.

However, the method of designation by the pattern parameter designation unit 62 is not limited to the method described above. The pattern parameter designation unit 62 may receive an instruction from a user via a keyboard or a pointing device of the controller 6, and acquire a processing parameter of at least one of the first pattern or the second pattern by referring to the storage unit 63 based on the instruction.

Further, the pattern parameter designation unit 62 may acquire processing parameters of at least one of the first pattern or the second pattern generated by the user of the resin container manufacturing apparatus 100 using the keyboard or the pointing device of the controller 6.

The processing data generation unit 64 generates processing data for forming at least one of the first pattern or the second pattern on the basis of pattern data of at least one of the first pattern or the second pattern and processing parameters of at least one of the first pattern or the second pattern.

The processing data includes rotation condition data for the rotator unit 3 to rotate the preform 30, scanning condition data for the laser irradiation unit 2 to perform the scanning of the processing laser beam 20, and irradiation condition data for the laser irradiation unit 2 to perform the irradiation of the processing laser beam 20 in synchronization with the rotation of the preform 30. The movement unit 4 also includes movement condition data for the movement unit 4 to move the preform 30 in the Y-direction and dust collection condition data for the dust collection unit 5 to perform dust collection operation.

The processing data generation unit 64 outputs the generated processing data to each of the laser irradiation control unit 65, the laser scanning control unit 66, the rotation control unit 67, the movement control unit 68, and the dust collection control unit 69.

The laser irradiation control unit 65 includes the light intensity control unit 651 and the pulse control unit 652, and controls irradiation of the processing laser beam 20 onto the preform 30 by the laser light source 21 on the basis of irradiation condition data. Further, the laser irradiation control unit 65 controls the irradiation timing of the processing laser beam 20 to the preform 30 in synchronization with the rotation of the preform 30 by the rotation unit 3 based on the synchronization detection signal from the synchronization detector. The irradiation timing control using the synchronization detection signal can be applied to or incorporated by a known technique described in, for example, Japanese Unexamined Patent Application Publication No. 2008-073894. Herein, the detailed description thereof is omitted.

When the laser light source 21 includes multiple laser light sources, the laser irradiation control unit 65 performs the control described above independently for each of the multiple laser light sources.

The light intensity control unit 651 controls the light intensity of the processing laser beam 20, and the pulse control unit 652 controls the pulse width and irradiation timing of the processing laser beam 20.

The laser scanning control unit 66 controls the scanning of the processing laser beam 20 by the scanning unit 23 based on the scanning condition data. Specifically, the on-off control of driving the scanning mirror and control of driving frequency are performed.

The rotation control unit 67 controls the on-off control of the rotation driving, a rotation angle, a rotation direction, and a rotation speed of the preform by the rotation unit 3 based on the rotation condition data. The rotation control unit 67 may continuously rotate the preform 30 in a predetermined rotational direction, or may reciprocate the preform 30 within a predetermined angle range such as ±90 degrees while switching the rotational direction.

The movement control unit 68 controls the on-off control of the movement drive of the preform 30 the movement direction, the movement amount, and the movement speed of the preform 30 by the movement unit 4 based on the movement condition data.

The dust collection control unit 69 controls the on-off control of dust collection by the dust collection unit 5, the flow rate, and flow velocity of air to be sucked based on the dust collection condition data. A device for moving the dust collection unit 5 may be provided, and the movement of the dust collection unit 5 by the device may be controlled so that the dust collection unit 5 is disposed in the vicinity of the position irradiated with the processing laser beam 20.

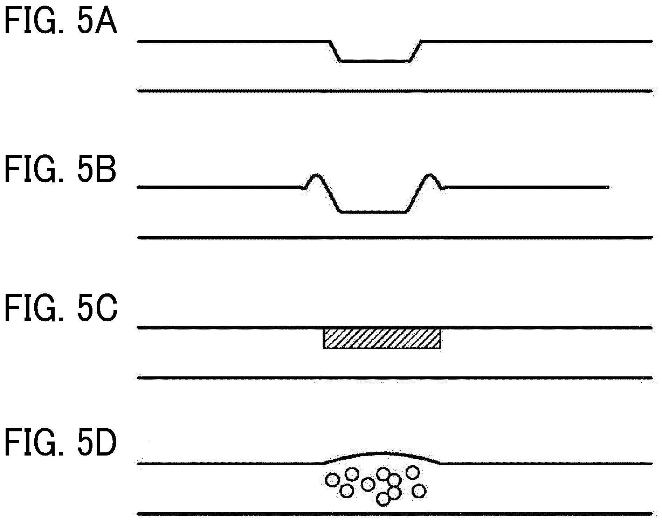

The change in property of the base material of the preform 30 by irradiation of the processing laser beam 20 will be described. FIGS 5A to 5D are diagrams of an example of change in property of the base material of the preform by irradiation of the processing laser beam 20.

FIG. 5A is a diagram of shape of the concave portion formed by evaporating the base on the surface of the preform. FIG. 5B is a diagram of a shape of the concave portion formed by melting the base on the surface of the preform. In the case of FIG. 5B, the peripheral edge portion of the concave portion is raised as compared with that of the concave portion in FIG. 5A.

FIG. 5C is a diagram of a change in the crystallization state of the surface of the substrate of the preform, and FIG. 5D is a diagram of a change in the foaming state of the interior of the substrate of the preform.

In such a way, at least one of the first pattern or the second pattern can be formed on the surface or inside of the preform by changing the shape of the surface of the preform or changing the property such as the crystallized state of the substrate surface or the foamed state of the inside of the substrate.

As a method for forming a concave shape by vaporizing a base material on the surface of a preform, for example, a pulse laser having a wavelength of 355 nm to 1064 nm and a pulse width of 10 fs to 500 nm or less is irradiated. As a result, the base material in the portion irradiated with the laser beam evaporates, and minute concave portions can be formed on the surface.

Further, by irradiating a continuous wave (CW) laser having a wavelength of 355 nm to 1064 nm, the base material can be melted to form the concave portion. Further, when the laser beam is continuously irradiated even after the base material has melted, the inside and the surface of the base material can be foamed and become hazy.

In order to change the crystallization state, for example, by using PET as a base material and irradiating a CW laser having a wavelength of 355 nm to 1064 nm to raise the temperature of the base material at once, and then gradually cooling the base material by reducing, for example, the laser power, the PET of the base material can be brought into a crystallized state, thereby making the PET of the base material opaque. When the temperature is raised and then rapidly cooled by turning off the laser beam, the PET becomes amorphous and transparent.

The change in the base material property of the preform is not limited to those illustrated in FIGS. 5A to 5D. The properties of the base of resin may be changed by yellowing, oxidation, or surface modification.

When laser marking forms the third pattern on the resin container after blow molding , the third pattern can be formed in the same methods and devices in FIGS. 2 to 5D.

Embodiments of the resin container manufacturing method and a resin container manufacturing apparatus will be described in detail with reference to the drawings. In the drawings, the same components are denoted by the same reference numbers, and redundant description may be omitted. In addition, the number, position, and shape of the constituent members described below are not limited to those in the present embodiment, and can be set to the number, position, or shape preferable for carrying out the present embodiment.

### First Embodiment

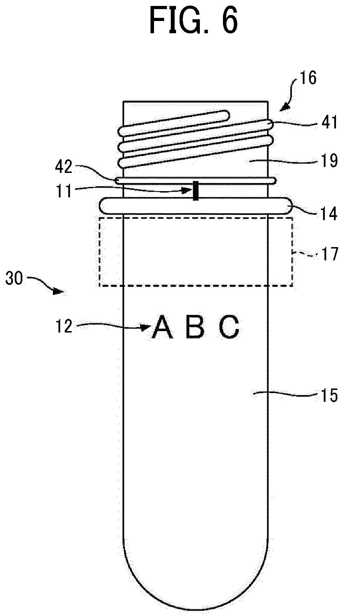

FIG. 6 is a diagram of the preform 30 having a first pattern 11 and a second pattern 12 formed thereon. The preform 30 has a neck portion 16 and a body portion 15. The neck portion 16 includes a flat portion 19, a screw threaded portion 41 (male thread), a neck ring 14, and a support ring 42. The screw threaded portion 41 is formed in the flat portion 19, and is screwed and fastened to the cap to be sealed. The neck ring 14 and the support ring 42 are formed so as to protrude from the flat portion 19. The position where the first pattern 11 is formed is preferably at the neck portion 16 or the upper portion of the body portion 15, that is, at the body portion 15 closer to the neck portion 16, more preferably within 20 mm from the neck ring 14 because of a small amount of deformation in blow molding, and more preferably within 10 mm from the neck ring 14 because of position information on the third pattern.

In the resin container manufacturing method according to the embodiments, the portion of the body portion is within 20 mm from the neck portion.

The first pattern forming device for forming the first pattern 11 and the second pattern forming device for forming the second pattern 12 may be the same device or different device. Further, the first pattern device may be a mold processed so that a shape such as a notch is formed on the mold side at the time of injection molding of the preform 30, or may be a printing device such as an inkjet printer or a laser marking device. Further, the second pattern 12 may be formed (the second pattern forming step) after the first pattern 11 is formed (the first pattern forming step), or the second pattern 12 may be formed after the first pattern is formed and the second pattern 12 may be formed after the first pattern is formed. By contrast, the first pattern 11 may be formed after the second pattern 12 is formed, or the first pattern 11 may be formed after another process is performed after the second pattern 12 is formed. Preferably, the step of forming the first pattern 11 and the step of forming the second pattern 12 are the identical steps. More preferably, the first pattern forming step and the second pattern forming step are the identical steps in terms of that the positional deviation between the patterns becomes small, and that the positional deviation or displacement becomes small in the case of the same device.

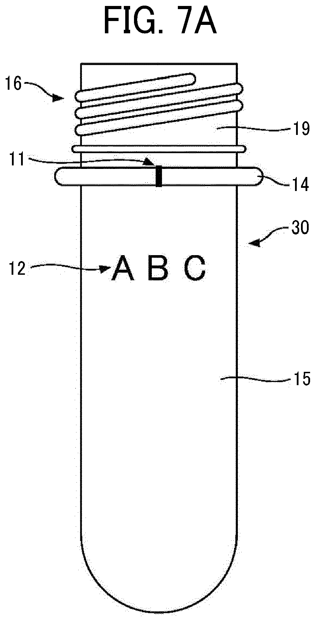

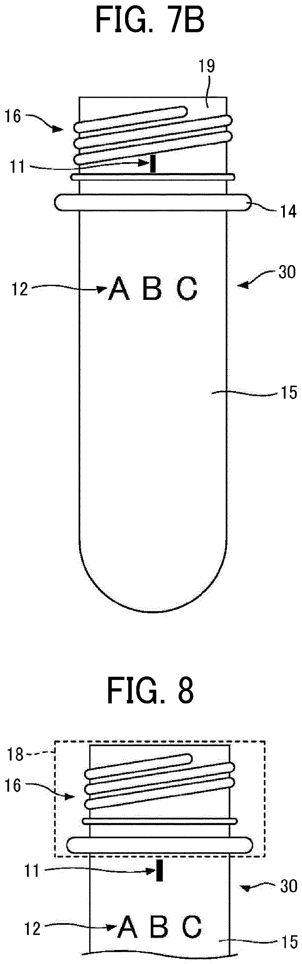

In FIG. 6, the first pattern 11 is formed in a flat portion 19 between the support ring 42 and the neck ring 14. Since the neck portion 16 is not deformed during blow molding, the position of the first pattern 11 does not change. In FIG. 7A, the first pattern 11 is formed on the neck ring 14 of the neck portion 16. In FIG. 7B, the first pattern 11 is formed on the flat portion 19 of the neck portion 16. In FIGS. 7A and 7B, the second pattern 12 is formed in the body portion 15.

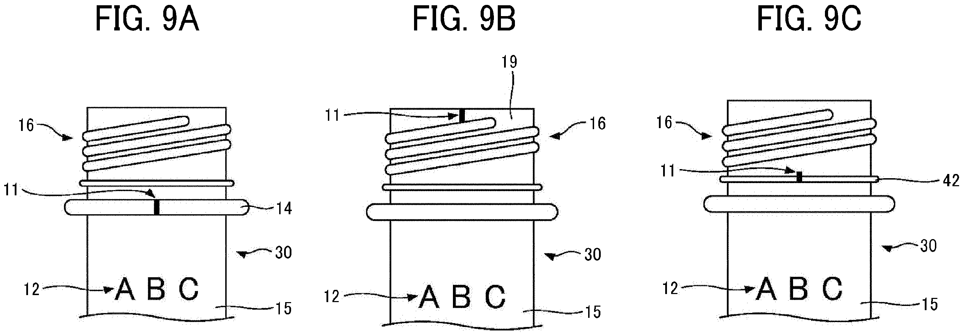

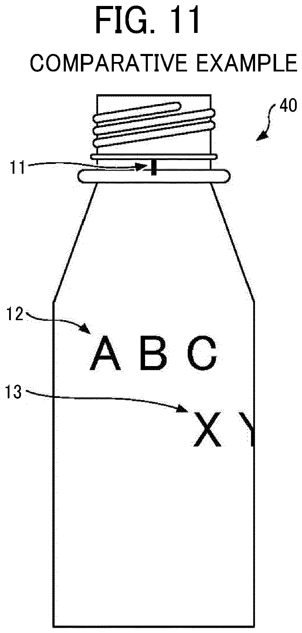

When the first pattern 11 is formed on the body portion 15, as illustrated in FIG. 8, it is preferable to form the first pattern 11 on the body portion 15 closer to the neck portion 16 because the deformation amount after blow molding is small near the neck portion 16. Thus, in the preform 30, the first pattern 11 is preferably located within 20 mm from the lower end of the neck ring 14, and more preferably within 10 mm from the lower end of the neck ring 14. The shape of the first pattern 11 is not particularly limited and can be appropriately selected according to the purpose. Preferably, the shape of the first pattern 11 is a short line perpendicular to the neck portion 16 as illustrated in FIG. 8 because such a short line is easy to read by a simple low-cost optical sensor and recognize position information. As illustrated in FIG. 8, as an advantage, the first pattern 11 is not detected as an error because the first pattern 11 is formed in a non-deformation region that does not deform when the preform 30 is formed by blow molding, and the non-deformation region is not subject to appearance inspection after blow molding and after content filling. It is preferable that the first pattern 11 is formed in the non-deformation region 18. For example, FIG. 9A is a diagram of an example in which the first pattern 11 is formed on the neck ring 14. FIG. 9B is a diagram of an example in which the first pattern 11 is formed on the flat portion 19 in the vicinity of the opening through which air is blown into the preform. FIG. 11C is a diagram of the first pattern 11 formed on the support ring 42.

In the resin container manufacturing method according to the embodiments, further includes: blowing air into the preform on which the first pattern and the second pattern are formed to form the resin container. An amount of deformation of the preform at the first position by the blowing is smaller than an amount of deformation of the preform at the second position by the blowing.

### Second Embodiment

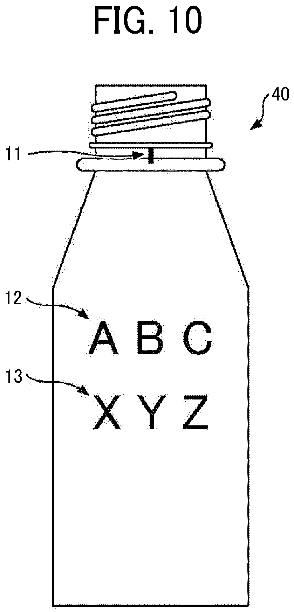

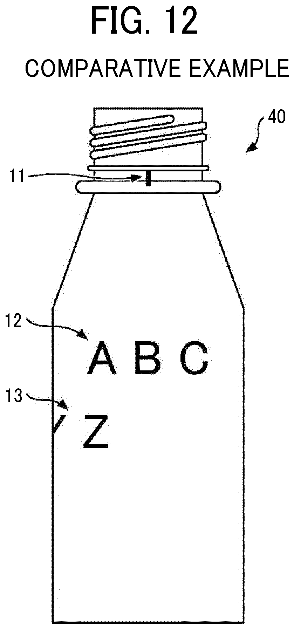

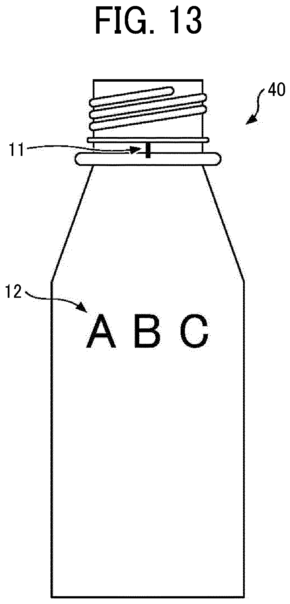

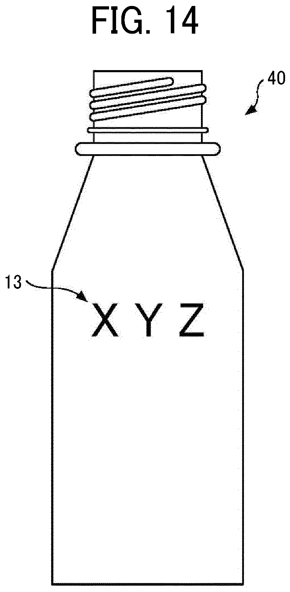

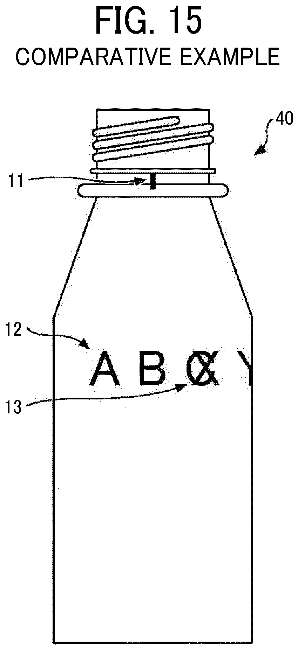

After the preform 30 is molded into the resin container 40 by blow molding, the third pattern 13 is formed on the resin container 40 based on the first pattern 11 In the second embodiment, it is preferable that the second pattern 12 and the third pattern 13 are formed not so as to overlap each other and that the positions of the second pattern 12 and the third pattern 13 in the circumferential direction on the resin container are the same. FIG. 10 is a diagram of a resin container 40 on which the second pattern 12 and the third pattern 13 are formed at correct positions. FIG. 11 is a diagram of a resin container 40 on which the third pattern 13 is formed at an incorrect position shifted to the right in the circumferential direction with respect to the second pattern 12 as a comparative example. FIG. 12 is a diagram of a resin container 40 on which the third pattern 13 is formed at an incorrect position shifted to the left in the circumferential direction with respect to the second pattern 12 as ac comparative example. As illustrated in FIG. 11 and FIG. 12, when the second pattern and the third pattern are formed at incorrect positions, the consumer may misunderstand information on the patterns or have a negative impression on a product quality due to the appearance. FIG. 13 is a diagram of a front side of the resin container 40 on which the second pattern 12 is formed correctly, and FIG. 14 is a rear side of the resin container 40 on which the third pattern is formed correctly. FIG. 15 is a diagram of a resin container 40 on which the second pattern 12 and the third pattern 13 are formed at incorrect positions and partially overlapped each other as a comparative example. As illustrated in FIG. 15, when the second pattern 12 and the third pattern 13 are formed so as to partially overlap each other, the consumer who may buy the product may misunderstand information on the patterns or have a negative impression on a product quality due to the appearance.

In the resin container manufacturing method according to the embodiments, the second position is different from the first position in an axial direction of the resin container, the third position is different from the first position and the second position in the axial direction of the resin container, and the second position and the third position are the same with the first position in a circumferential direction of the resin container.

As described above, the embodiments of the present invention have been described in detail, but the embodiments of the present invention is not limited thereto. Various modifications may be made without departing from the scope of the present invention, as defined in the appended claims.

According to the manufacturing a resin container manufacturing method according to any one of the first aspect to the eleventh aspect and the resin container manufacturing apparatus for manufacturing a resin container according to any one of the twelfth aspect to the twenty-second aspect, the visibility of the resin container is increased, and the aim of the present invention can be achieved.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

## Claims

1. A resin container manufacturing method comprising:
forming a first pattern (S1) at a first position in a preform (30) to be formed to a resin container (40), the preform (30) having:
a body portion (15); and
a neck portion (16),
forming a second pattern (S2) at a second position in the preform (15) based on the first position of the first pattern (11);
wherein the forming the first pattern (S1) forms the first pattern (11) at one of:
the neck portion (15); or
a portion of the body portion (16) in a vicinity of the neck portion (15), **characterized in that**
the resin container manufacturing method further comprises:
blowing air (S3) into the preform (30) on which the first pattern (11) and the second pattern (12) are formed to form the resin container (40),
wherein said one of the neck portion (15) or the portion of the body portion (16) is in a vicinity of an opening of the preform (30), and
the blowing (S3) blows the air into the preform (30) through the opening; and
forming a third pattern (S4) at a third position in the resin container (40) based on the first position of the first pattern (11).

2. The resin container manufacturing method according to claim 1,
wherein the forming the first pattern (S1) forms the first pattern (11) by laser marking.

3. The resin container manufacturing method according to claim 1,
wherein the forming the second pattern (S2) forms the second pattern (12) by laser marking.

4. The resin container manufacturing method according to claim 1,
wherein the forming the third pattern (S4) forms the third pattern (12) by laser marking.

5. The resin container manufacturing method according to claim 1,
wherein the third position is different from the second position in an axial direction of the resin container, and
the third position is the same with the second position in a circumferential direction of the resin container.

6. The resin container manufacturing method according to claim 1,
wherein the second pattern (12) includes at least one of a character, an image, or a figure.

7. The resin container manufacturing method according to claim 1,
wherein the third pattern (13) includes at least one of a character, an image or a figure.

8. The resin container manufacturing method according to claim 1,
wherein an amount of deformation of the preform at the first position by the blowing is smaller than an amount of deformation of the preform at the second position by the blowing.

9. The resin container manufacturing method according to claim 1,
wherein the portion of the body portion (16) is within 20 mm from the neck portion (15).

10. The resin container manufacturing method according to claim 1,
wherein the second position is different from the first position in an axial direction of the resin container (40),
the third position is different from the first position and the second position in the axial direction of the resin container (40), and
the second position and the third position are the same with the first position in a circumferential direction of the resin container (40).

## Patentansprüche

1. Kunststoffbehälter-Herstellungsverfahren, aufweisend:
Bilden eines ersten Musters bzw. Dekors (S1) an einer ersten Position an einem Vorformling (30), um an einem Kunststoffbehälter (40) gebildet zu werden, wobei der Vorformling (30) hat:
einen Körperabschnitt (15); und
einen Halsabschnitt (16),
Bilden eines zweiten Musters bzw. Dekors (S2) an einer zweiten Position an dem Vorformling (15), basierend auf der ersten Position des ersten Musters bzw. Dekors (11);
wobei das Bilden des ersten Musters bzw. Dekors (S1) das erste Muster bzw. Dekor (11) bildet, und zwar an einem von:
dem Halsabschnitt (15); oder
einem Abschnitt des Körperabschnitts (16) in einer Nähe des Halsabschnitts (15),
**dadurch gekennzeichnet, dass**
das Kunststoffbehälter-Herstellungsverfahren ferner aufweist:
Blasen von Luft (S3) in den Vorformling (30), auf welchem das erste Muster bzw. Dekor (11) und das zweite Muster bzw. Dekor (12) gebildet sind, um den Kunststoffbehälter (40) zu bilden bzw. zu formen,
wobei der eine von dem Halsabschnitt (15) oder dem Abschnitt von dem Körperabschnitt (16) in einer Nähe von einer Öffnung des Vorformlings (30) ist, und
das Blasen (S3) bläst die Luft in den Vorformling (30) durch die Öffnung; und Bilden eines dritten Musters bzw. Dekors (S4) an einer dritten Position an dem Kunststoffbehälter (40) basierend auf der ersten Position des ersten Musters bzw. Dekors (11).

2. Kunststoffbehälter-Herstellungsverfahren gemäß Anspruch 1, wobei das Bilden des ersten Musters bzw. Dekors (S1) das erste Muster bzw. Dekor (11) durch Lasermarkierung bzw. Laserbeschriftung bildet.

3. Kunststoffbehälter-Herstellungsverfahren gemäß Anspruch 1, wobei das Bilden des zweiten Musters bzw. Dekors (S2) das zweite Muster bzw. Dekor (12) durch Lasermarkierung bzw. Laserbeschriftung bildet.

4. Kunststoffbehälter-Herstellungsverfahren gemäß Anspruch 1, wobei das Bilden des dritten Musters bzw. Dekors (S4) das dritte Muster bzw. Dekor (12) durch Lasermarkierung bzw. Laserbeschriftung bildet.

5. Kunststoffbehälter-Herstellungsverfahren gemäß Anspruch 1, wobei die dritte Position unterschiedlich von der zweiten Position in einer axialen Richtung des Kunststoffbehälters ist, und
wobei die dritte Position dieselbe mit der zweiten Position in einer umfänglichen Richtung des Kunststoffbehälters ist.

6. Kunststoffbehälter-Herstellungsverfahren gemäß Anspruch 1, wobei das zweite Muster bzw. Dekor (12) wenigstens eines von einem Buchstaben bzw. Zeichen, einem Bild oder einer Figur bzw. Zahl enthält.

7. Kunststoffbehälter-Herstellungsverfahren gemäß Anspruch 1, wobei das dritte Muster bzw. Dekor (13) wenigstens eines von einem Buchstaben bzw. Zeichen, einem Bild oder einer Figur bzw. Zahl enthält.

8. Kunststoffbehälter-Herstellungsverfahren gemäß Anspruch 1, wobei ein Ausmaß der Verformung des Vorformlings an der ersten Position durch das Blasen kleiner als ein Ausmaß der Verformung von dem Vorformling an der zweiten Position durch das Blasen ist.

9. Kunststoffbehälter-Herstellungsverfahren gemäß Anspruch 1, wobei der Abschnitt des Körperabschnitts (16) innerhalb 20mm von dem Halsabschnitt (15) ist.

10. Kunststoffbehälter-Herstellungsverfahren gemäß Anspruch 1, wobei die zweite Position unterschiedlich von der ersten Position in einer axialen Richtung des Kunststoffbehälters (40) ist,
wobei die dritte Position unterschiedlich von der ersten Position und der zweiten Position in der axialen Richtung des Kunststoffbehälters (40) ist, und
wobei die zweite Position und die dritte Position dieselbe mit der ersten Position in einer umfänglichen Richtung des Kunststoffbehälters (40) sind.

## Revendications

1. Procédé de fabrication de récipient en résine comprenant :
la formation d'un premier motif (S1) à une première position dans une préforme (30) à former en récipient en résine (40), la préforme (30) ayant :
une portion corps (15) ; et
une portion col (16),
la formation d'un deuxième motif (S2) à une deuxième position dans la préforme (15) sur la base de la première position du premier motif (11) ;
dans lequel la formation du premier motif (S1)forme le premier motif (11) au niveau de l'une parmi :
la portion col (15) ; ou
une portion de la portion corps (16) à proximité de la portion col (15),
**caractérisé en ce que**
le procédé de fabrication de récipient en résine comprenant en outre :
le soufflage (S3) d'air dans la préforme (30) sur laquelle le premier motif (11) et le deuxième motif (12) sont formés pour former le récipient en résine (40),
dans lequel ladite une parmi la portion col (15) ou la portion corps (16) se trouve à proximité d'une ouverture de la préforme (30), et
le soufflage (S3) souffle l'air dans la préforme (30) à travers l'ouverture ; et
la formation d'un troisième motif (S4) à une troisième position dans le récipient en résine (40) sur la base de la première position du premier motif (11).

2. Procédé de fabrication de récipient en résine selon la revendication 1,
dans lequel la formation du premier motif (S1)forme le premier motif (11) par marquage au laser.

3. Procédé de fabrication de récipient en résine selon la revendication 1,
dans lequel la formation du deuxième motif (S2) forme le deuxième motif (12) par marquage au laser.

4. Procédé de fabrication de récipient en résine selon la revendication 1,
dans lequel la formation du troisième motif (S4) forme le troisième motif (12) par marquage au laser.

5. Procédé de fabrication de récipient en résine selon la revendication 1,
dans lequel la troisième position est différente de la deuxième position dans une direction axiale du récipient en résine, et
la troisième position est identique à la deuxième position dans une direction circonférentielle du récipient en résine.

6. Procédé de fabrication de récipient en résine selon la revendication 1,
dans lequel le deuxième motif (12) inclut au moins l'un parmi un caractère, une image, ou une figure.

7. Procédé de fabrication de récipient en résine selon la revendication 1,
dans lequel le troisième motif (13) inclut au moins l'un parmi un caractère, une image ou une figure.

8. Procédé de fabrication de récipient en résine selon la revendication 1,
dans lequel une quantité de déformation de la préforme à la première position par le soufflage est inférieure à une quantité de déformation de la préforme à la deuxième position par le soufflage.

9. Procédé de fabrication de récipient en résine selon la revendication 1,
dans lequel la portion de la portion corps (16) se trouve à 20 mm ou moins de la portion col (15).

10. Procédé de fabrication de récipient en résine selon la revendication 1,
dans lequel la deuxième position est différente de la première position dans une direction axiale du récipient en résine (40),
la troisième position est différente de la première position et de la deuxième position dans la direction axiale du récipient en résine (40), et
la deuxième position et la troisième position sont identiques à la première position dans une direction circonférentielle du récipient en résine (40).
